# EUROPEAN PATENT SPECIFICATION

(11) **EP 4 474 280 B1**
(45) Date of publication and mention of the grant of the patent: **29.07.2026**
(21) Application number: 24181229.6
(22) Date of filing: 10.06.2024
(51) Int. Cl.: B64D 15/04, B64D 27/31, B64D 27/32, B64D 27/34, B64D 29/00, B64D 35/026

(54) **ELECTRIC AIRCRAFT ENGINE AND COMPRESSOR FOR ENGINE RETROFIT**
ELEKTRISCHES FLUGZEUGTRIEBWERK UND KOMPRESSOR ZUR NACHRÜSTUNG DES TRIEBWERKS
MOTEUR ÉLECTRIQUE D'AÉRONEF ET COMPRESSEUR POUR MODERNISATION DE MOTEUR

(30) Priority: 09.06.2023 US 202318207791
(43) Date of publication of application: 11.12.2024
(73) Proprietor: PRATT & WHITNEY CANADA CORP., Longueuil, Québec J4G 1A1 (CA)
(72) Inventor: BOUSQUET, Michel, (01BE5) Longueuil, J4G 1A1 (CA); NGUYEN, Kevin, (01BE5) Longueuil, J4G 1A1 (CA)
(74) Representative: Dehns

(56) References cited:
- EP-B1- 2 250 090
- WO-A1-2020/180370
- US-B1- 11 073 107
- US-B2- 11 473 497

## Description

### BACKGROUND

This application relates to an electric aircraft engine that includes an electric compressor within its nacelle such that it can be retrofit to existing gas turbine engine powered aircraft.

Aircraft typically have one or more gas turbine engines. The gas turbine engines provide propulsion through a propulsor such as a propeller or fan. Typically, the propulsor delivers air into a compressor section where the air is compressed and then delivered into a combustor. In the combustor the compressed air is mixed with fuel and ignited. Products of this combustion pass downstream over turbine rotors, driving them to rotate.

As can be appreciated, aircraft include a number of complex systems. Several require compressed air. As one example there are anti-ice systems which receive hot compressed air to deliver air outwardly to melt or shed ice. Such a system may be mounted in the wing of the aircraft. Another system is an environmental control system which provides conditioned air into an aircraft cabin, the cockpit, storage areas, and for other functions.

In current aircraft, the gas turbine engine compressor typically has one or two taps which tap compressed air to be delivered to the anti-ice system and the ECS system.

The compressed air taps are connected into the aircraft fuselage and wing through connections extending through a strut or mount that attaches the engine to the aircraft.

There are efforts underway to replace gas turbine engines with electric powered engines or a hybrid of the two. This will reduce fuel burn, emissions and potentially noise.

Future aircraft systems may be designed to incorporate such electric engines and use a source of compressed air other than a gas turbine engine compressor. However, retrofitting current aircraft with an electric engine would raise challenges as there would be no way to supply the compressed air to systems such as the anti-ice system and ECS without reworking the system.

US 11,073,107 discloses systems and methods for hybrid electric turbine engines.

WO 2020/180370 discloses an aircraft propulsion system having hybrid-electric powerplant and combustion powerplant.

US 11,473,497 discloses an engine bleed system with a motorized compressor.

### SUMMARY

According to an aspect of the present invention, an electric aircraft engine is provided in accordance with claim 1. An aircraft having such an engine is also disclosed.

According to another aspect of the present invention, a method of retrofitting an existing aircraft includes the steps of providing an aircraft having a gas turbine engine with a gas turbine engine compressor. There is at least one compressed air tap for supplying compressed air from the gas turbine engine compressor to an anti-ice system and to an environmental control system through compressed air connections. The method includes removing the gas turbine engine including disconnecting the gas turbine engine compressor from the compressed air connections to the anti-ice system and the environmental control system. The method then mounts an electric engine to the aircraft. The electric engine includes an electric motor driving a propulsor. A power source powers the electric motor. An electric compressor supplies compressed air, and a nacelle surrounds the electric motor, the power source and the electric compressor. The mounting step includes connecting the electric compressor to the compressed air connections to supply compressed air to the anti-ice system and to the environmental control system.

Features of embodiments are recited in the dependent claims.

These and other features will be best understood from the following drawings and specification, the following is a brief description.

### BRIEF DESCRIPTION OF THE DRAWINGS

Figure 1 shows a prior art aircraft.
Figure 2 shows a detail of the prior art aircraft.
Figure 3 shows an aircraft engine according to this disclosure connecting into an aircraft.
Figure 4A shows a first step in retrofitting the Figure 2 aircraft with the Figure 3 engine.
Figure 4B shows a subsequent step in retrofitting the Figure 3 engine onto the prior art aircraft.
Figure 5 shows another engine embodiment.

### DETAILED DESCRIPTION

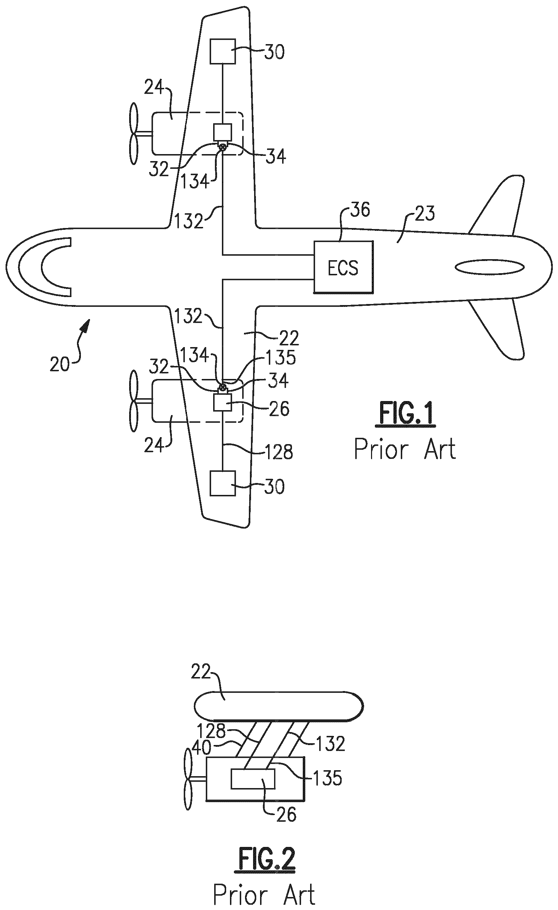

A current aircraft 20 is illustrated highly schematically in Figure 1. Wings 22 are shown as is a fuselage 23. Engines 24 are shown mounted beneath the wings 22. It should be understood that in some applications the engines could be mounted to the fuselage 23, and such aircraft would also benefit from this disclosure. The prior art engines 24 are gas turbine engines having a compressor 26 as described above. The compressor 26 is shown delivering air through tap 28 to an anti-ice system 30. Compressor 26 also has a low pressure tap 32 and a high pressure tap 34 communicating to a valve 134 that sends air, via a valve output 135, to a connection 132 leading to an ECS system 36.

While two engines 24 are illustrated on aircraft 20, this disclosure extends to aircraft having a single engine or more than two engines.

Systems 30 and 36 are shown schematically. In practice both are very complex systems. It may be desirable to retrofit an electric engine to replace engines 24, as explained below. Due to the complexity of systems 30 and 36 it would be desirable to not replace or even modify systems 30 and 36 when retrofitting the engine. This disclosure facilitates this goal.

As shown in the prior art Figure 2, the engines 24 are mounted to the wing 22 through a strut or pylon 40. The connections 128 and 132 extend through the pylon 40.

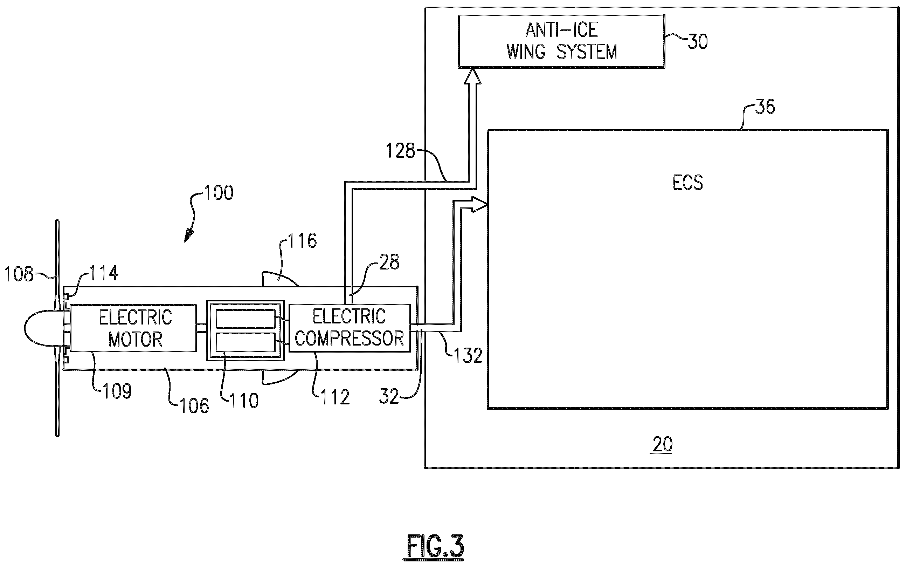

Figure 3 shows an engine, and anti-ice and ECS systems under this disclosure. An electric engine 100 supplies air through a tap 28 to a connection 128 on aircraft 20 and then to an anti-ice system 30. The electric engine 100 also supplies air through a tap 32 to a connection 132 on aircraft 20 and then to an ECS system 36.

The engine 100 includes an electric motor 109 driving propeller 108. Some power storage device 110 is utilized to power the electric motor 109. The power storage devices 110 may be batteries, fuel cells, ultracapacitors, or any other acceptable power storage device.

An electric compressor 112 is shown supplying compressed air to the taps 28 and 32. Taps 28 and 32 are connected to connections 128 and 132, respectively. The electric compressor 112 may also be powered by the power storage device 110. However, other power sources may drive the electric motor for compressor 112. Air is supplied to the electric compressor 112 through openings 114 in a nacelle 106. Alternatively, or in combination, an air scoop 116 is formed in nacelle 106. The air is compressed and delivered to the anti-ice system 30 and the ECS 36.

Notably, the electric compressor 112, electric motor 109 and power storage devices 110 are mounted within the nacelle 106. This has benefits when retrofitting an aircraft with an existing gas turbine to have engine 100.

Future aircraft that are to utilize electric engines will have their anti-ice system and environmental control system designed to receive compressed air from a source other than a gas turbine engine compressor. However, it may be desirable to retrofit existing aircraft with such an electric engine 100. Although the anti-ice system 30 and the environmental control system 36 are shown as black boxes in fact they are very complex systems. It would be burdensome to redesign or replace these systems to receive an alternative source of compressed air. By utilizing this disclosure, one can work with both systems as existing on the aircraft being retrofit.

This will reduce the burden of having to make any such changes to those systems.

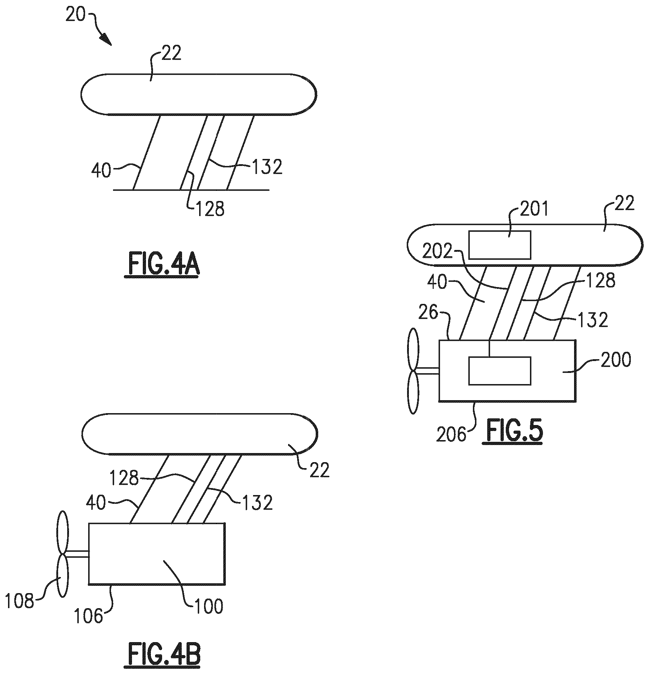

Figure 4A shows a first step in retrofitting the aircraft 20. The existing gas turbine engines 24 are removed, leaving the strut 40 and connections 128 and 132.

Next, as shown in Figure 4B, an electric engine 100 is attached to the strut 40. Taps 28 and 32, such as shown in Figure 3 are connected into the anti-ice system and ECS system through connections 128 and 132, respectively. The compressed air connections from the electric compressor 112 are now connected into the existing conduits 128 and 132 in the strut 40. One does not need two taps to the ECS system 36 as the compressor 112 can be run at a constant speed no matter the power state of motor 109. Thus, the anti-ice system 30 and the ECS system 36 need not be modified in combination with retrofitting the aircraft with the electric engine.

Figure 5 shows an alternative embodiment 200. Here there is not a power storage device within the nacelle 206. Rather, a bus bar 202 communicates electric power from a power storage device 201 which may be mounted on the aircraft, such as in wing 22.

An electric aircraft engine 100 under this disclosure could be said to include an electric motor 109 driving a propulsor 108. A power source 110 powers the electric motor 109. An electric compressor 112 supplies compressed air. A nacelle 106 surrounds the electric motor, the power source and the electric compressor.

In another embodiment according to the previous embodiment, the power source is a power storage device.

In another embodiment according to any of the previous embodiments, the power storage device also powers the electric compressor.

In another embodiment according to any of the previous embodiments, an air inlet communicates through the nacelle to the electric compressor.

In another embodiment according to any of the previous embodiments, the air inlet is provided by a scoop inlet in an outer peripheral surface of the nacelle.

In another embodiment according to any of the previous embodiments, the air inlet is formed in a forward face of the nacelle adjacent the propulsor.

In another embodiment according to any of the previous embodiments, the power storage device is at least one of a battery, a fuel cell and an ultracapacitor.

An aircraft 20 under this disclosure could be said to include a fuselage 23 and a pair of wings 22. An anti-ice system 30 is provided in at least one of the pair of wings and fuselage. The anti-ice system is operable to receive compressed air and deliver it to areas of the at least one of the pair of wings or fuselage to melt ice. Alternatively, the anti-ice system may deliver air to pressurize deicer boots which will shed ice from the wings. An environmental control system 36 receives compressed air and utilizes the compressed air within a cabin of the aircraft fuselage 23. An electric engine 100 is connected to at least one of the pair of wings and the fuselage through a pylon 40. The electric engine 100 includes an electric motor 109 driving a propulsor 108. A power storage device and a power source 110 powers the electric motor. An electric compressor 112 supplies compressed air. A nacelle 106 surrounds the electric motor, the power source and the electric compressor. Compressed air from the electric compressor is connected to pass outwardly of the nacelle 106 and to the anti-ice system 30 and to the environmental control system 36.

In another embodiment according to any of the previous embodiments, the power source is the power storage device that is also within the nacelle.

In another embodiment according to any of the previous embodiments, the power source is a bus bar receiving power from the power storage device and the power storage device is mounted in at least one of the fuselage and wing.

In another embodiment according to any of the previous embodiments, the power storage device also powers the electric compressor.

In another embodiment according to any of the previous embodiments, the power storage device is at least one of a battery, a fuel cell and an ultracapacitor.

In another embodiment according to any of the previous embodiments, an air inlet communicates through the nacelle to the electric compressor.

In another embodiment according to any of the previous embodiments, the air inlet is provided by a scoop inlet in an outer peripheral surface of a nacelle.

In another embodiment according to any of the previous embodiments, the air inlet is formed in a forward face of a nacelle adjacent the propulsor.

A method of retrofitting an existing aircraft under this disclosure could be said to include the steps of providing an aircraft 20 having a gas turbine engine 24 with a gas turbine engine compressor 26. There is at least one compressed air tap 28/32/34 for supplying compressed air from the gas turbine engine compressor to an anti-ice system 30 and to an environmental control system 36 through compressed air connections 128/132. The method includes removing the gas turbine engine, including disconnecting the gas turbine engine compressor from the compressed air connections to the anti-ice system and the environmental control system. The method then mounts an electric engine 100 to the aircraft. The electric engine includes an electric motor 109 driving a propulsor 108. The electric engine further includes a power storage device 110 powers the electric motor. The electric engine further includes an electric compressor 112 for supplying compressed air, and a nacelle surrounding the electric motor, the power storage device and the electric compressor. The mounting step includes connecting the electric compressor to the compressed air connections to supply compressed air to the anti-ice system and to the environmental control system.

In another embodiment according to any of the previous embodiments, prior to the removing step the gas turbine engine is attached to the aircraft through a pylon, and the electric engine is mounted to the pylon.

In another embodiment according to any of the previous embodiments, the power source is a power storage device that is also within the nacelle.

In another embodiment according to any of the previous embodiments, the power source is a bus bar receiving power from a power storage device mounted in at least one of the fuselage and wing.

In another embodiment according to any of the previous embodiments, the power storage device also powers the electric compressor.

Although embodiments have been disclosed, a worker of skill in this art would recognize that modifications would come within the scope of this disclosure. For that reason, the following claims should be studied to determine the scope and content

## Claims

1. An electric aircraft engine (100; 200) for an aircraft (20), comprising:
an electric motor (109) driving a propulsor (108);
a power source (110) for powering the electric motor (109);
an electric compressor (112) for supplying compressed air; and
a nacelle (106; 206) surrounding said electric motor (109), said power source (110; 202) and said electric compressor (112),
**characterised in that** the electric aircraft engine (100; 200) comprises:
a first tap (28) for supplying compressed air from the electric compressor (112) to an anti-ice system (30) through a first connection (128) on the aircraft; and
a second tap (32) for supplying compressed air from the electric compressor (112) to an environmental control system (36) through a second connection (132) on the aircraft.

2. The electric aircraft engine (100) of claim 1, wherein the power source (110) is a power storage device (110).

3. The electric aircraft engine (100) of claim 2, wherein the power storage device (110) also powers the electric compressor (112).

4. The electric aircraft engine (100) of claim 2 or 3, wherein the power storage device (110) is at least one of a battery, a fuel cell and an ultracapacitor.

5. The electric aircraft engine (100; 200) of any preceding claim, wherein an air inlet (114, 116) communicates through the nacelle (106; 206) to the electric compressor (112).

6. The electric aircraft engine (100; 200) of claim 5, wherein the air inlet (116) is provided by a scoop inlet (116) in an outer peripheral surface of the nacelle (106; 206).

7. The electric aircraft engine (100; 200) of claim 5, wherein the air inlet (114) is formed in a forward face of the nacelle (106; 206) adjacent the propulsor (108).

8. An aircraft (20) comprising:
a fuselage (23) and a pair of wings (22);
an anti-ice system (30) provided in at least one of the pair of wings (22) and fuselage (23), the anti-ice system (30) operable to receive compressed air and deliver it to areas of the at least one of the pair of wings (22) and fuselage (23) to melt ice;
an environmental control system (36) to receive compressed air and utilize the compressed air within a cabin of the aircraft fuselage (23);
the electric aircraft engine (100; 200) of any preceding claim connected to at least one of the pair of wings (22) and the fuselage (23) through a pylon (40); and
a connection (128, 132) configured to pass compressed air from the electric compressor (112) outwardly of the nacelle (106; 206) and to the anti-ice system (30) and the environmental control system (36).

9. The aircraft (20) of claim 8, when dependent on claim 2, wherein the power storage device (110) is also within the nacelle (106).

10. The aircraft (20) of claim 8, wherein the power source (202) is a bus bar receiving power from the power storage device (201) and the power storage device (201) is mounted in at least one of the fuselage (23) and the pair of wings (22).

11. A method of retrofitting an existing aircraft (20), the method comprising:
providing an aircraft (20), the aircraft (20) having a gas turbine engine (24) with a gas turbine engine compressor (26) and at least one compressed air tap (28, 32, 34) for supplying compressed air from the gas turbine engine compressor (26) to an anti-ice system (30) and to an environmental control system (36) through compressed air connections (128, 132);
removing the gas turbine engine (24) including disconnecting the gas turbine engine compressor (26) from the compressed air connections (128, 132) to the anti-ice system (30) and the environmental control system (36); and
mounting an electric engine (100; 200) to the aircraft (20), the electric engine (100; 200) including an electric motor (109) driving a propulsor (108), a power source (110; 202) for powering the electric motor (109), an electric compressor (112) for supplying compressed air, and a nacelle (106; 206) surrounding said electric motor (109), said power source (110) and said electric compressor (112), the mounting step including connecting the electric compressor (112) to the compressed air connections (128, 132) to supply compressed air to the anti-ice system (30) and to the environmental control system (36).

12. The method of claim 11, wherein prior to the removing step the gas turbine engine (24) is attached to the aircraft (20) through a pylon (40), and the mounting step includes mounting the electric engine (100) to the pylon (40).

13. The method of claim 11 or 12, wherein the power source (110) is a power storage device (110) that is also within the nacelle (106).

14. The method of claim 11 or 12, wherein the power source (202) is a bus bar receiving power from a power storage device (201) mounted in at least one of the fuselage (23) and the pair of wings (22).

15. The method of any of claims 11 to 14, wherein the power storage device (110) also powers the electric compressor (112).

## Patentansprüche

1. Elektrisches Luftfahrzeugtriebwerk (100; 200) für ein Luftfahrzeug (20), umfassend:
einen Elektromotor (109), der einen Propulsor (108) antreibt;
eine Energiequelle (110) zum Versorgen des Elektromotors (109) mit Energie;
einen elektrischen Kompressor (112) zum Zuführen von Druckluft; und
eine Gondel (106; 206), die den Elektromotor (109), die Energiequelle (110; 202) und den elektrischen Kompressor (112) umschließt,
**dadurch gekennzeichnet, dass** das elektrische Luftfahrzeugtriebwerk (100; 200) umfasst:
eine erste Zapfstelle (28) zum Zuführen von Druckluft von dem elektrischen Kompressor (112) zu einem Anti-Eis-System (30) durch eine erste Verbindung (128) an dem Luftfahrzeug; und
eine zweite Zapfstelle (32) zum Zuführen von Druckluft von dem elektrischen Kompressor (112) zu einem Umweltkontrollsystem (36) durch eine zweite Verbindung (132) an dem Luftfahrzeug.

2. Elektrisches Luftfahrzeugtriebwerk (100) nach Anspruch 1, wobei die Energiequelle (110) eine Energiespeichervorrichtung (110) ist.

3. Elektrisches Luftfahrzeugtriebwerk (100) nach Anspruch 2, wobei die Energiespeichervorrichtung (110) auch den elektrischen Kompressor (112) mit Energie versorgt.

4. Elektrisches Luftfahrzeugtriebwerk (100) nach Anspruch 2 oder 3, wobei die Energiespeichervorrichtung (110) mindestens eines von einer Batterie, einer Brennstoffzelle und einem Ultrakondensator ist.

5. Elektrisches Luftfahrzeugtriebwerk (100; 200) nach einem der vorhergehenden Ansprüche, wobei ein Lufteinlass (114, 116) durch die Gondel (106; 206) hindurch zu dem elektrischen Kompressor (112) führt.

6. Elektrisches Luftfahrzeugtriebwerk (100; 200) nach Anspruch 5, wobei der Lufteinlass (116) durch einen Hutzeneinlass (116) in einer Außenumfangsoberfläche der Gondel (106; 206) bereitgestellt ist.

7. Elektrisches Luftfahrzeugtriebwerk (100; 200) nach Anspruch 5, wobei der Lufteinlass (114) in einer Stirnfläche der Gondel (106; 206) benachbart zu dem Propulsor (108) ausgebildet ist.

8. Luftfahrzeug (20), umfassend:
einen Rumpf (23) und ein Paar Tragflächen (22);
ein Anti-Eis-System (30), das in mindestens einem von dem Paar Tragflächen (22) und dem Rumpf (23) bereitgestellt ist, wobei das Anti-Eis-System (30) betreibbar ist, um Druckluft aufzunehmen und sie an Bereiche des mindestens einen von dem Paar Tragflächen (22) und dem Rumpf (23) abzugeben, um Eis zu schmelzen;
ein Umweltkontrollsystem (36), um Druckluft aufzunehmen und die Druckluft innerhalb einer Kabine des Luftfahrzeugrumpfs (23) zu nutzen;
das elektrische Luftfahrzeugtriebwerk (100; 200) nach einem der vorhergehenden Ansprüche, das durch einen Pylon (40) mit mindestens einem von dem Paar Tragflächen (22) und dem Rumpf (23) verbunden ist; und
eine Verbindung (128, 132), die ausgelegt ist, um Druckluft von dem elektrischen Kompressor (112) aus der Gondel (106; 206) heraus und zu dem Anti-Eis-System (30) und dem Umweltkontrollsystem (36) zu leiten.

9. Luftfahrzeug (20) nach Anspruch 8, wenn abhängig von Anspruch 2, wobei sich die Energiespeichervorrichtung (110) auch innerhalb der Gondel (106) befindet.

10. Luftfahrzeug (20) nach Anspruch 8, wobei die Energiequelle (202) eine Sammelschiene ist, die Energie von der Energiespeichervorrichtung (201) aufnimmt, und die Energiespeichervorrichtung (201) in mindestens einem von dem Rumpf (23) und dem Paar Tragflächen (22) angebracht ist.

11. Verfahren zum Nachrüsten eines vorhandenen Luftfahrzeugs (20), das Verfahren umfassend:
Bereitstellen eines Luftfahrzeugs (20), das Luftfahrzeug (20) aufweisend ein Gasturbinentriebwerk (24) mit einem Gasturbinentriebwerkskompressor (26) und mindestens einer Druckluftzapfstelle (28, 32, 34) zum Zuführen von Druckluft von dem Gasturbinentriebwerkskompressor (26) zu einem Anti-Eis-System (30) und zu einem Umweltkontrollsystem (36) durch Druckluftverbindungen (128, 132);
Entfernen des Gasturbinentriebwerks (24), beinhaltend ein Trennen des Gasturbinentriebwerkskompressors (26) von den Druckluftverbindungen (128, 132) zu dem Anti-Eis-System (30) und dem Umweltkontrollsystem (36); und
Anbringen eines elektrischen Triebwerks (100; 200) an dem Luftfahrzeug (20), das elektrische Triebwerk (100; 200) beinhaltend einen Elektromotor (109), der einen Propulsor (108) antreibt, eine Energiequelle (110; 202) zum Versorgen des Elektromotors (109) mit Energie, einen elektrischen Kompressor (112) zum Zuführen von Druckluft und eine Gondel (106; 206), die den Elektromotor (109), die Energiequelle (110) und den elektrischen Kompressor (112) umschließt, der Schritt des Anbringens beinhaltend ein Verbinden des elektrischen Kompressors (112) mit den Druckluftverbindungen (128, 132), um dem Anti-Eis-System (30) und dem Umweltkontrollsystem (36) Druckluft zuzuführen.

12. Verfahren nach Anspruch 11, wobei vor dem Schritt des Entfernens das Gasturbinentriebwerk (24) durch einen Pylon (40) an dem Luftfahrzeug (20) befestigt wird und der Schritt des Anbringens ein Anbringen des elektrischen Triebwerks (100) an dem Pylon (40) beinhaltet.

13. Verfahren nach Anspruch 11 oder 12, wobei die Energiequelle (110) eine Energiespeichervorrichtung (110) ist, die sich auch innerhalb der Gondel (106) befindet.

14. Verfahren nach Anspruch 11 oder 12, wobei die Energiequelle (202) eine Sammelschiene ist, die Energie von einer Energiespeichervorrichtung (201) aufnimmt, die in mindestens einem von dem Rumpf (23) und dem Paar Tragflächen (22) angebracht ist.

15. Verfahren nach einem der Ansprüche 11 bis 14, wobei die Energiespeichervorrichtung (110) auch den elektrischen Kompressor (112) mit Energie versorgt.

## Revendications

1. Moteur électrique d'aéronef (100 ; 200) pour un aéronef (20), comprenant :
un moteur électrique (109) entraînant un propulseur (108) ;
une source d'alimentation (110) pour l'alimentation du moteur électrique (109) ;
un compresseur électrique (112) pour la fourniture d'air comprimé ; et
une nacelle (106 ; 206) entourant ledit moteur électrique (109), ladite source d'alimentation (110 ; 202) et ledit compresseur électrique (112),
**caractérisé en ce que** le moteur électrique d'aéronef (100 ; 200) comprend :
une première prise d'air (28) pour alimenter en air comprimé le compresseur électrique (112) d'un système antigivreur (30) par l'intermédiaire d'un premier raccord (128) sur l'aéronef ; et
une seconde prise d'air (32) pour alimenter en air comprimé le compresseur électrique (112) d'un système de contrôle environnemental (36) par l'intermédiaire d'un second raccord (132) sur l'aéronef.

2. Moteur électrique d'aéronef (100) selon la revendication 1, dans lequel la source d'alimentation (110) est un dispositif de stockage d'énergie (110).

3. Moteur électrique d'aéronef (100) selon la revendication 2, dans lequel le dispositif de stockage d'énergie (110) alimente également le compresseur électrique (112).

4. Moteur électrique d'aéronef (100) selon la revendication 2 ou 3, dans lequel le dispositif de stockage d'énergie (110) est au moins l'un parmi une batterie, une pile à combustible et un ultracondensateur.

5. Moteur électrique d'aéronef (100 ; 200) selon une quelconque revendication précédente, dans lequel une entrée d'air (114, 116) communique par l'intermédiaire de la nacelle (106 ; 206) avec le compresseur électrique (112).

6. Moteur électrique d'aéronef (100 ; 200) selon la revendication 5, dans lequel l'entrée d'air (116) est fournie par une entrée de buse d'admission (116) dans une surface périphérique extérieure de la nacelle (106 ; 206).

7. Moteur électrique d'aéronef (100 ; 200) selon la revendication 5, dans lequel l'entrée d'air (114) est formée dans une face avant de la nacelle (106 ; 206) adjacente au propulseur (108).

8. Aéronef (20) comprenant :
un fuselage (23) et une paire d'ailes (22) ;
un système antigivreur (30) prévu dans au moins l'un parmi la paire d'ailes (22) et le fuselage (23), le système antigivreur (30) servant à recevoir de l'air comprimé et le distribuer vers des zones d'au moins l'un parmi la paire d'ailes (22) et le fuselage (23) pour faire fondre la glace ;
un système de contrôle environnemental (36) destiné à recevoir de l'air comprimé et à utiliser l'air comprimé dans une cabine du fuselage d'aéronef (23) ;
le moteur électrique d'aéronef (100 ; 200) selon une quelconque revendication précédente relié à au moins l'un parmi la paire d'ailes (22) et le fuselage (23) par l'intermédiaire d'un pylône (40) ; et
un raccord (128, 132) configuré pour faire passer l'air comprimé du compresseur électrique (112) vers l'extérieur de la nacelle (106 ; 206) et vers le système antigivreur (30) et le système de contrôle environnemental (36).

9. Aéronef (20) selon la revendication 8, lorsqu'elle dépend de la revendication 2, dans lequel le dispositif de stockage d'énergie (110) se trouve également à l'intérieur de la nacelle (106).

10. Aéronef (20) selon la revendication 8, dans lequel la source d'alimentation (202) est une barre omnibus recevant de l'énergie en provenance du dispositif de stockage d'énergie (201) et le dispositif de stockage d'énergie (201) est monté dans au moins l'un parmi le fuselage (23) et la paire d'ailes (22).

11. Procédé de modernisation d'un aéronef existant (20), le procédé comprenant :
la fourniture d'un aéronef (20), l'aéronef (20) ayant un moteur à turbine à gaz (24) avec un compresseur de moteur à turbine à gaz (26) et au moins une prise d'air comprimé (28, 32, 34) pour fournir de l'air comprimé du compresseur de moteur à turbine à gaz (26) à un système antigivreur (30) et à un système de contrôle environnemental (36) par l'intermédiaire de raccords d'air comprimé (128, 132) ;
le retrait du moteur à turbine à gaz (24), y compris la déconnexion du compresseur de moteur à turbine à gaz (26) des raccords d'air comprimé (128, 132) vers le système antigivreur (30) et le système de contrôle environnemental (36) ; et
le montage d'un moteur électrique (100 ; 200) sur l'aéronef (20), le moteur électrique (100 ; 200) comportant un moteur électrique (109) entraînant un propulseur (108), une source d'alimentation (110 ; 202) pour l'alimentation du moteur électrique (109), un compresseur électrique (112) pour la fourniture de l'air comprimé, et une nacelle (106 ; 206) entourant ledit moteur électrique (109), ladite source d'alimentation (110) et ledit compresseur électrique (112), l'étape de montage comportant le raccordement du compresseur électrique (112) aux raccords d'air comprimé (128, 132) pour fournir de l'air comprimé au système antigivreur (30) et au système de contrôle environnemental (36).

12. Procédé selon la revendication 11, dans lequel, avant l'étape de retrait, le moteur à turbine à gaz (24) est fixé à l'aéronef (20) par l'intermédiaire d'un pylône (40), et l'étape de montage comporte le montage du moteur électrique (100) sur le pylône (40).

13. Procédé selon la revendication 11 ou 12, dans lequel la source d'alimentation (110) est un dispositif de stockage d'énergie (110) qui se trouve également à l'intérieur de la nacelle (106).

14. Procédé selon la revendication 11 ou 12, dans lequel la source d'alimentation (202) est une barre omnibus recevant de l'énergie en provenance d'un dispositif de stockage d'énergie (201) monté dans au moins l'un parmi le fuselage (23) et la paire d'ailes (22).

15. Procédé selon l'une quelconque des revendications 11 à 14, dans lequel le dispositif de stockage d'énergie (110) alimente également le compresseur électrique (112).
